# EUROPEAN PATENT APPLICATION

(11) **EP 2 677 144 A1**
(43) Date of publication of application: **25.12.2013**
(21) Application number: 11858571.0
(22) Date of filing: 16.02.2011
(51) Int. Cl.: F02D 19/08, F02D 41/04

(54) **MULTIFUEL INTERNAL COMBUSTION ENGINE, AND METHOD OF CONTROLLING SAME**

(71) Applicant: TOYOTA JIDOSHA KABUSHIKI KAISHA, Toyota-shi, Aichi-ken, 471-8571 (JP)
(72) Inventor: MASUBUCHI, Masahiko, Toyota-shi, Aichi-ken 471-8571 (JP)
(74) Representative: Albutt, Anthony John
(86) International application number: PCT/JP2011/053291
(87) International publication number: WO 2012/111114

(57) **Abstract**

In a multi-fuel internal combustion engine using both CNG and light oil, good operating performance and good emissions are able to be maintained even in cases where a change of required engine load is large. The engine is provided with a supply amount decision means that carries out supply amount decision processing to decide an amount of supply of the CNG and an amount of supply of the light oil according to the required engine load which is an engine load required by a driver, a fuel supply means that supplies the CNG and the light oil in the amounts of supply decided by the supply amount decision means to the internal combustion engine, and a gas fuel supply control means that prohibits the supply of gas fuel in an amount equal to or more than a predetermined amount irrespective of the decision by the supply amount decision means, in cases where the speed of change of the required engine load is larger than a specified value.

## Description

### [TECHNICAL FIELD]

The present invention relates to an internal combustion engine, and in particular, to a multi-fuel internal combustion engine capable of using both of gas fuel and liquid fuel, as well as a control method therefor.

### [BACKGROUND ART]

There have been well known multi-fuel internal combustion engines which are operated by supplying gas fuel such as city gas, natural gas, etc., from an intake pipe, and at the same time by injecting liquid fuel such as light oil, etc., to combustion chambers by means of fuel injection devices. In such multi-fuel internal combustion engines, there has been proposed an invention in which more improved control of the engine performance and emissions is achieved by controlling the combustion characteristics at the time of operation so as to provide a target heat generation rate mapped beforehand (see a first patent document).

However, the above-mentioned conventional technique is to control the rate of heat generation to a desired pattern by mainly controlling the fuel injection timing of light oil as liquid fuel with respect to a change in a required load, and does not take into consideration a response delay of a pre-mixture of gas fuel and air with respect to a rapid change in the required load, etc. That is, in cases where a rapid change in the required load is dealt with by the amount of supply of gas fuel, there has been an inconvenience that an amount of intake air, an amount of EGR, an equivalent ratio, and the like are not changed to their target values, respectively, with high response. As a result of this, there has been a case where deterioration of combustion and/or deterioration of emissions will occur or deterioration of operating performance such as slowness in operation, poor deceleration feeling, etc., will occur, by the time parameters such as the amount of intake air, the amount of EGR, the equivalent ratio, and the like settle to their target values.

As causes for these, the following points are mentioned. That is, gas fuel is large in volume, and hence, when the amount of gas fuel is changed in accordance with a rapid change in the required load, an amount of intake air and/or an amount of EGR gas flowing into the internal combustion engine will be affected, so that a certain time is needed until these amounts converge to their target values. In addition, gas fuel is a compressible fluid and is low in the modulus of volume elasticity, so some time is needed until an equilibrium state is reached.

In addition, there has also been proposed a technique in which the flow rates of gas fuel and liquid fuel as well as an engine load (output) during engine operation are detected, and the flow rates of the gas fuel and the liquid fuel corresponding to the load thus detected are calculated and decided by the use of a control map which has been beforehand inputted to a control device, so that control is carried out so as to make the actual flow rates become the values thus calculated and decided (see, for example, a second patent document). However, in this case, too, when the amount of supply of gas fuel is changed, the amount of intake air and the amount of EGR will be affected by a change in fuel volume, so there has been an inconvenience that at the time of a sudden change in the required load, a response delay occurs in the equivalent ratio, etc., as a result of which combustion gets worse.

### [PRIOR ART REFERENCES]

### [PATENT DOCUMENTS]

[First Patent Document] Published Japanese Translation No. 2007-507640 of PCT International Publication
[Second Patent Document] Japanese Patent Laid-Open Publication No. H11-166433

### [SUMMARY OF THE INVENTION]

### [PROBLEMS TO BE SOLVED BY THE INVENTION]

The present invention has been made in view of the above-mentioned circumstances, and has for its object to provide a technique in which in a multi-fuel internal combustion engine capable of using both gas fuel and liquid fuel, good operating performance and good emissions are able to be maintained even in cases where a change of required load is large.

### [MEANS FOR SOLVING THE PROBLEMS]

The present invention to achieve the above-mentioned object resides, as its greatest feature, in that in the control of an amount of fuel supply in a multi-fuel internal combustion engine, the amount of supply of gas fuel is limited in cases where the speed of change of a required engine load is equal to or more than a predetermined value.

More specifically, a multi-fuel internal combustion engine in which gas fuel and liquid fuel are caused to combust, thereby obtaining an engine output, is characterized by comprising:
a supply amount decision means that carries out supply amount decision processing to decide an amount of supply of said gas fuel and an amount of supply of said liquid fuel according to a required engine load which is an engine load required by a driver;
a fuel supply means that supplies said gas fuel and said liquid fuel in the amounts of supply decided by said supply amount decision means to said internal combustion engine; and
a gas fuel supply control means that prohibits the supply of said gas fuel in an amount equal to or more than a predetermined amount irrespective of the decision by said supply amount decision means, in cases where the speed of change of said required engine load is larger than a specified value.

According to this, it is possible to suppress a change in an amount of intake air or in an amount of EGR gas resulting from a change of the amount of supply of the gas fuel, and hence, even if the required engine load changes rapidly, it is possible to maintain the operating performance and emissions of the internal combustion engine in a good condition. Here, note that in the above description, the specified value is a speed of change as a threshold value in which in cases where the speed of change of the required engine load is larger than this threshold value, when the gas fuel in the amount decided by the supply amount decision processing is supplied, the operating performance or emissions get worse under the influence of the volume thereof. Also, in the above description, the predetermined amount is an amount of supply as a threshold value in which even when the gas fuel in an amount less than this threshold value is supplied, the operating performance or emissions do not get worse under the influence of the volume thereof, and may be beforehand obtained through experiments, etc.

In addition, in the present invention, in cases where the supply of said gas fuel in the amount equal to or more than the predetermined amount is prohibited by said gas fuel supply control means, generation of an engine output corresponding to said required engine load after changed may be made possible by causing the amount of said liquid fuel to increase. According to this, even in cases where the supply of the gas fuel in the amount equal to or more than the predetermined amount is prohibited by the gas fuel supply control means, a decrease in the amount of heat (output) resulting therefrom can be compensated for by an increase in the amount of the liquid fuel, thus making it possible to obtain an output corresponding to the required engine load.

Moreover, in the present invention, after the supply of said gas fuel in the amount equal to or more than the predetermined amount is prohibited and the amount of said liquid fuel is caused to increase, the amount of the gas fuel may be increased and at the same time the amount of the liquid fuel may be decreased, while maintaining a total amount of heat generated by combustion of the gas fuel and the liquid fuel.

According to this, it is possible to cause the amounts of supply of the gas fuel and the liquid fuel to approach the amounts of supply, respectively, decided by the supply amount decision means in a gradual manner so as to deal with the required engine load after changed. As a result of this, it becomes possible to achieve improvements in thermal efficiency, combustion noise, emissions, and so on, which are the effects obtained by the use of the gas fuel, while suppressing the deterioration of the operating performance or emissions due to the influence of the volume of the gas fuel.

In addition, the present invention may resides in a method for controlling a multi-fuel internal combustion engine in which gas fuel and liquid fuel are caused to combust, thereby obtaining an engine output, and which is characterized by comprising:
a supply amount decision step to carry out supply amount decision processing to decide an amount of supply of said gas fuel and an amount of supply of said liquid fuel according to a required engine load which is an engine load required by a driver; and
a fuel supply step to supply said gas fuel and said liquid fuel in the amounts of supply decided in said supply amount decision step to said internal combustion engine;
wherein the supply of said gas fuel in an amount equal to or more than a predetermined amount is prohibited irrespective of the decision in said supply amount decision step, in cases where the speed of change of said required engine load is larger than a specified value.

Moreover, in the above-mentioned method for controlling a multi-fuel internal combustion engine, in cases where the supply of said gas fuel in the amount equal to or more than the predetermined amount is prohibited, generation of an engine output corresponding to said required engine load after changed may be made possible by causing the amount of said liquid fuel to increase. Further, after the supply of said gas fuel in the amount equal to or more than the predetermined amount is prohibited and the amount of said liquid fuel is caused to increase, the amount of the gas fuel may be increased and at the same time the amount of the liquid fuel may be decreased, while maintaining a total amount of heat generated by combustion of the gas fuel and the liquid fuel.

Here, it is to be noted that the means for solving the problems in the present invention can be used in combination where possible.

### [EFFECT OF THE INVENTION]

In the present invention, in a multi-fuel internal combustion engine capable of using both gas fuel and liquid fuel, it is possible to maintain good operating performance and good emissions even in cases where a change of required engine load is large.

### [BRIEF DESCRIPTION OF THE DRAWINGS]

[Fig. 1] is a view showing the schematic construction of an internal combustion engine, its intake and exhaust system and a control system according to a first embodiment of the present invention.
[Fig. 2] is a cross sectional view showing the interior structure of the internal combustion engine according to the first embodiment of the present invention.
[Fig. 3] is a flow chart showing a transient injection amount decision routine in the first embodiment of the present invention.
[Fig. 4] is a graph showing the temporal changes of individual parameters at the time of carrying out the transient injection amount decision routine in the first embodiment of the present invention.
[Fig. 5] is a flow chart showing a transient injection amount decision routine 2 in a second embodiment of the present invention.
[Fig. 6] is a graph showing the temporal changes of individual parameters at the time of carrying out the transient injection amount decision routine 2 in the second embodiment of the present invention.
[Fig. 7] is a graph showing an example of the relation between the rate of change of a required engine load and a light oil heat amount ratio in the second embodiment of the present invention.

### [BEST MODES FOR CARRYING OUT THE INVENTION]

Hereinafter, best modes for carrying out the present invention will be described in detail by way of example with reference to the attached drawings.

### [First Embodiment]

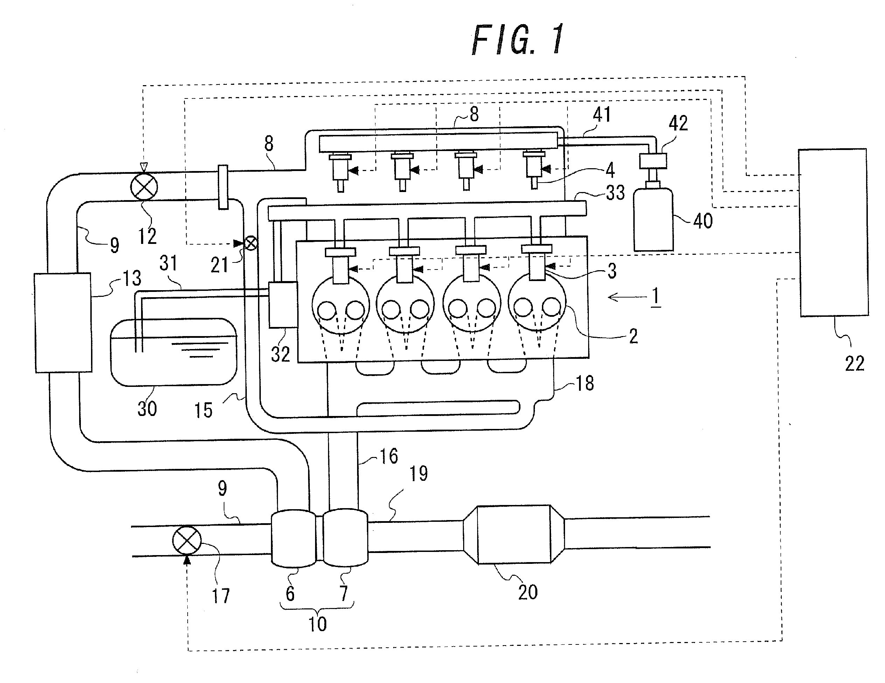

Fig. 1 is a view showing the schematic construction of an internal combustion engine, intake and exhaust systems and a control system, to which the present invention is applied. An intake manifold 8 is connected to the internal combustion engine 1, and the intake manifold 8 is in fluid communication with a combustion chamber of each cylinder 2 through an unillustrated intake port. A throttle valve 12, which is able to change the channel cross section of an intake pipe 9, is arranged in the vicinity of a connection portion of the intake manifold 8 and the intake pipe 9. The throttle valve 12 is connected through electrical wiring to an ECU 22 which is to be later described, so that the valve opening of the throttle valve 12 is controlled based on a control signal from the ECU 22, whereby the flow rate of intake air flowing through the intake pipe 9 can be adjusted.

An intercooler 13, which serves to cool the intake air flowing through the intake pipe 9, is arranged at the upstream side of the throttle valve 12. At the upstream side of the intercooler 13, there is arranged a compressor housing 6 in which a compressor of a centrifugal supercharger 10, which is operated by the use of the energy of exhaust gas as a driving source, is located. At the further upstream side of the compressor housing 6, there is arranged a second throttle valve 17 which is able to change the channel cross section of the intake pipe 9. The second throttle valve 17 is also connected to the ECU 22, so that it serves to adjust the flow rate of the intake air flowing through the intake pipe 9 based on a control signal from the ECU 22.

On the other hand, an exhaust manifold 18 is connected to the internal combustion engine 1, and the exhaust manifold 18 has individual branch pipes which are in fluid communication with the combustion chambers of the individual cylinders 2, respectively. A turbine housing 7, in which a turbine of the centrifugal supercharger 10 is located, is connected to the exhaust manifold 18 through a collecting pipe 16. An exhaust pipe 19 is connected to an opening portion of the turbine housing 7 from which the exhaust gas flows out. An exhaust gas purification device 20 for purifying the exhaust gas is arranged in the exhaust pipe 19.

Here, note that the exhaust gas purification device 20 may be a filter which serves to trap particulate matter in the exhaust gas, or a three-way catalyst which serves to purify NOx in the exhaust gas, or in addition thereto, an NOx storage reduction catalyst, a urea selective reduction NOx catalyst, or an oxidation catalyst which serves to oxidize unburnt fuel in the exhaust gas, etc., or may be their appropriate combinations. As such a combination, there is exemplified a DPNR having the function of a filter and the function of an NOx storage reduction catalyst in combination, etc.

In addition, the exhaust manifold 18 and the intake manifold 8 is put into fluid communication with each other by means of an EGR passage 15. An EGR valve 21, which is able to change the channel cross section of the EGR passage 15, is arranged in the EGR passage 15. The ERG valve 12 is connected through electrical wiring to the ECU 22, so that the valve opening of the EGR valve 12 is controlled based on a control signal from the ECU 22, whereby the amount or flow rate of exhaust gas flowing through the EGR passage 15 can be adjusted.

On each of the cylinders 2 of the internal combustion engine 1, there is mounted a liquid fuel injection valve 3 for injecting light oil into a corresponding cylinder 2. Light oil, acting as the liquid fuel of the internal combustion engine 1, is stored in a liquid fuel tank 30, and is supplied to a common rail 33 through a fuel pressure feed pipe 31 by means of a fuel pump 32. The light oil supplied to the common rail 33 is supplied to the individual liquid fuel injection valves 3, respectively, with its pressure having been regulated to a uniform predetermined injection pressure.

In addition, a gas fuel injection valve 4, which serves to inject natural gas (hereinafter, CNG), is arranged in the unillustrated intake port of each cylinder 2 of the internal combustion engine 1. The CNG is sealingly filled in a CNG tank 40 in a state compressed at a high pressure of about 20 MPa. Then, the CNG, after having been subjected to pressure reduction adjustment by a regulator 42, is supplied to the gas fuel injection valves 4 by means of a gas fuel supply pipe 41. Here, note that in this embodiment, a fuel supply means is constructed to include the liquid fuel injection valves 3 and the gas fuel injection valves 4.

In the internal combustion engine 1, there is arranged in combination therewith the ECU 22 which is an electronic control computer for controlling the internal combustion engine 1. The ECU 22 is provided with a ROM, a RAM, a CPU, an input port, an output port, and so on, which are not illustrated, and carries out known control of fuel injection by the liquid fuel injection valves 3 and the gas fuel injection valve 4 in accordance with the operating state of the internal combustion engine 1, which are detected by unillustrated various sensors, and/or the requirements by a driver, and at the same time, outputs opening command signals to the EGR valve 21, the throttle valve 12, and the second throttle valve 17. In addition, an injection amount decision program for carrying out the above-mentioned known control and a program for a transient injection amount decision routine to be described later are stored in the ROM of the ECU 22, and are executed by the ECU 22.

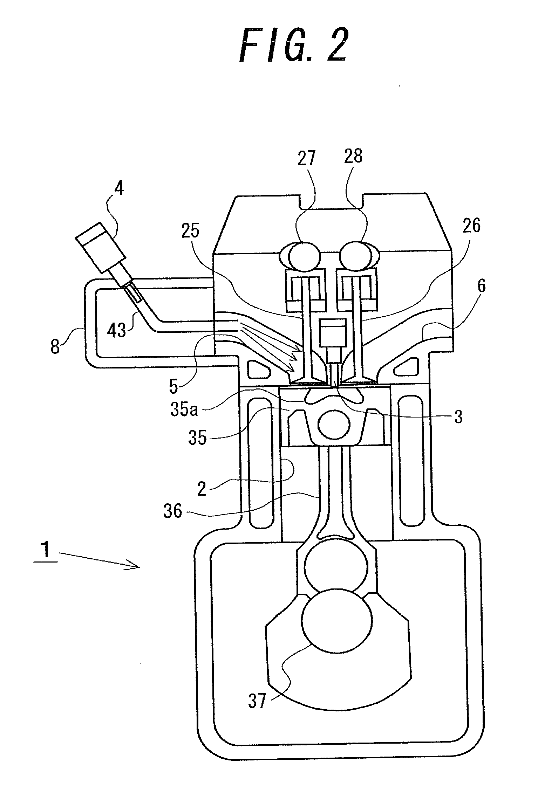

Fig. 2 shows a cross sectional view of the internal combustion engine 1 in this embodiment. The cylinders 2 of the internal combustion engine 1 are connected to the intake manifold 8 through the intake ports 5, respectively, and at the same time are connected to the exhaust manifold, which is not shown in Fig. 2, through the exhaust ports 6.

The internal combustion engine 1 is provided with intake valves 25 which serve to open and close the open ends of the intake ports 5 facing to the insides of the cylinders 2, respectively, and exhaust valves 26 which serve to open and close the open ends of the exhaust ports 6 facing to the insides of the cylinders 2, respectively. The intake valves 25 and the exhaust valves 26 are each driven to open and close by means of an intake side camshaft 27 and an exhaust side camshaft 28, respectively. Each of the cylinders 2 is provided on its upper portion with a liquid fuel injection valve 3 of a direct injection type that directly injects fuel into the interior of a corresponding cylinder 2. In addition, the distribution pipes 43 connected at their tip ends to the nozzles of the gas fuel injection valves 4, respectively, are disposed in the intake ports 5, respectively, and CNG, which is gas fuel, is injected into the intake ports 5 from the tip ends of the distribution pipes 43, respectively.

Further, a piston 35 is fitted in each of the cylinders 2 of the internal combustion engine 1 for sliding movement relative thereto. The piston 35 is connected with a crankshaft 37 through a connecting rod 36. In addition, a concave cavity 35a is formed on the top face of the piston 35. In the internal combustion engine 1, CNG is injected into the intake ports 5 at the time of opening of the intake valves 25, respectively, so that a pre-mixture of the CNG is formed in each of the combustion chambers. Then, by injecting light oil from the liquid fuel injection valves 3 in the vicinity of compression top dead center, the pre-mixture of the CNG in each cavity 35a is ignited at multiple points by means of a light oil diffusion flame, thus intending to obtain higher thermal efficiency, and at the same time to make a decrease in emissions and combustion noise, as compared with ordinary compression ignition internal combustion engines. Also, according to such an internal combustion engine 1, in areas in which CNG is able to be obtained inexpensively, it becomes possible to attain a decrease in total fuel costs.

In the above-mentioned internal combustion engine 2, formerly, an amount of injection of light oil, which is a liquid fuel, and an amount of injection of CNG, which is a gas fuel, were respectively decided according to a required engine load by the driver (hereinafter, referred to simply as "a required load") by means of an injection amount decision program stored in the ROM of the ECU 22, so that fuel injection was carried out by the liquid fuel injection valves 3 and the gas fuel injection valves 4. However, in this method, there was a case where, for example, in cases where the required load increased rapidly, if the amount of injection of CNG was accordingly made to increase rapidly, the amount of intake air and the amount of EGR were changed by the volume of increased CNG. In addition, because the gas fuel such as CNG is a compressible fluid, the modulus of volume elasticity thereof is low, and a certain time is taken for the gas fuel to be stabilized to an equilibrium state, so there was a case where a response delay would occur by the time a suitable equivalent ratio was reached corresponding to the required load.

As a result, there was a case where deterioration of combustion occurred and emissions got worse, by the time a required amount of intake air, a required amount of EGR, a required equivalent ratio, and so on after a sudden change of the required load, were stabilized to their target values, respectively. In addition, there was a case where deterioration of response such as slowness in operation, poor deceleration feeling, etc., was caused. Here, note that, the ECU 22 and the injection amount decision program correspond to a supply amount decision means in this embodiment. Moreover, the processing to respectively decide the amount of injection of light oil, which is the liquid fuel, and the amount of injection of CNG, which is the gas fuel, by means of the injection amount decision program, corresponds to a supply amount decision step in this embodiment. Further, the processing to carry out fuel injection by means of the liquid fuel injection valves 3 and the gas fuel injection valves 4 corresponds to a fuel supply step in this embodiment.

In contrast to this, in this embodiment, in cases where the rate of change of the required load is larger than a specified value, the required load is dealt with, as a first step, by injection of only light oil. After that, as a second step, the amount of injection of CNG is gradually increased, and at the same time, the amount of injection of light oil is gradually decreased, while maintaining a total amount of heat generated by combustion of the light oil and the CNG to a required amount of heat (an amount of combustion heat which is able to generate an output force corresponding to the required load), whereby the amount of injection of CNG is caused to gradually change to an amount of injection of CNG which should be decided by the injection amount decision program. Here, note that in the following description, the ratio of the amount of heat by combustion of light oil to the total amount of heat by combustion of light oil and CNG is called a light oil heat amount ratio, and the ratio of the amount of heat by combustion of CNG to the total amount of heat by combustion of light oil and CNG is called a CNG heat amount ratio. In addition, the individual heat amount ratios of light oil and CNG when an amount of injection of light oil and an amount of injection of CNG to be decided by the injection amount decision program are injected are expressed as required ratios thereof, respectively.

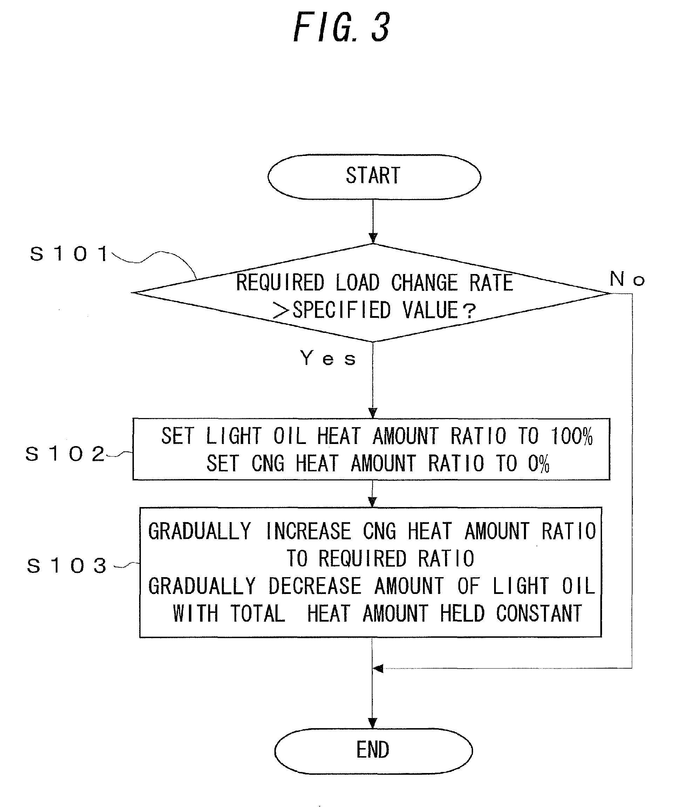

Fig. 3 shows a flow chart of a transient injection amount decision routine in the this embodiment. When this routine is carried out by means of the ECU 22, first, in step S101, it is determined whether the rate of change of the load required by the driver (hereinafter the required load change rate) is larger than a specified value which has been set beforehand. Here, the required load change rate means an amount of change per unit time of the required load in cases where the required load changes. In addition, this required load change rate corresponds to the speed of change of the required engine load in this embodiment. Also, the specified value is a threshold value based on which, when the amounts of injection of light oil and CNG are decided by the injection amount decision program under the condition that the required load change rate is larger than this threshold value, it is determined that operating performance or emissions get worse due to a response delay of the amount of intake air, the amount of EGR, the equivalent ratio, or the like. This specified value is beforehand set through experiments, etc. In cases where a negative determination is made in step S101, this routine is once ended. On the other hand, in cases where an affirmative determination is made in step S101, the routine proceeds to step S102.

In step S102, the amount of injection of light oil is set to an amount in which the required load is able to be dealt with by light oil at 100 %. At the same time, the amount of injection of CNG is set to 0. In another words, the light oil heat amount ratio is set to 100 %, and the CNG heat amount ratio is set to 0 %. With the amounts of injection of the individual fuels set in step S102, the internal combustion engine 1 will momentarily exhibit operating performance equivalent to that of a conventional compression ignition internal combustion engine using light oil. Accordingly, sufficient followability can be exhibited with respect to the change of the required load. In addition, at that time, CNG is not supplied to the intake ports, so the influence of the volume of CNG with respect to the amount of intake air or the amount of EGR is prevented, and the deterioration of operating performance and emissions is suppressed. After the processing of the step S102 is completed, the routine goes to step S103.

In step S103, the amount of injection of CNG is caused to increase gradually until the CNG heat amount ratio becomes the original required ratio decided by the injection amount decision program. Also, at the same time, the amount of injection of light oil is caused to decrease gradually until it becomes the original light oil heat amount ratio finally decided by the injection amount decision program, while maintaining the total amount of heat by combustion of light oil and CNG at a constant value. When the processing of the step S103 ends, this routine is once ended.

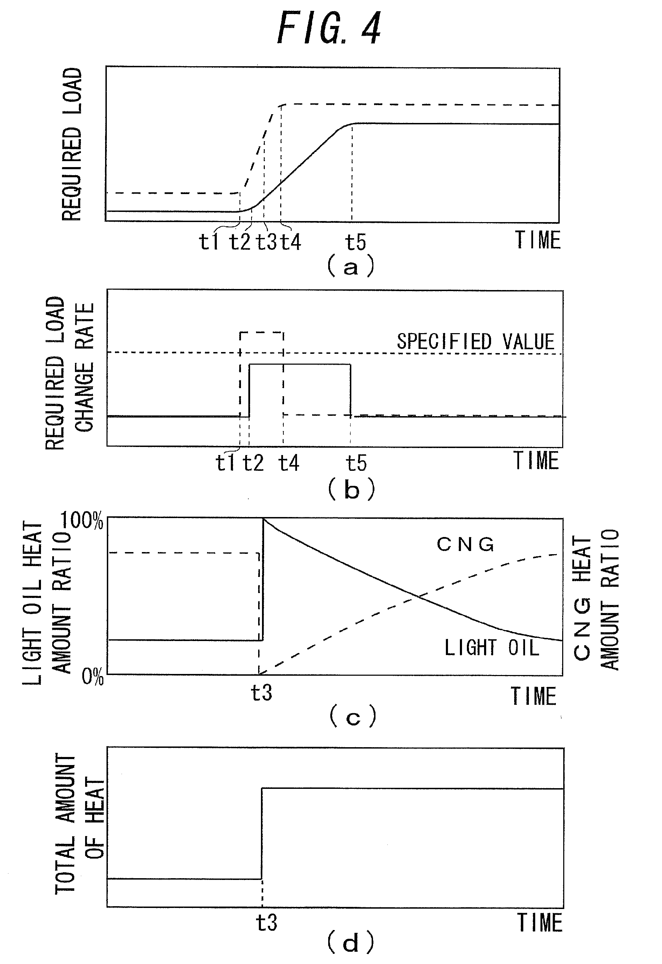

In Fig. 4, there are shown the temporal changes of individual parameters in cases where the transient injection amount decision routine is carried out at the time when the required load by the driver changes. In Fig. 4(a), there are shown the temporal changes of the required load by the driver. Here, a solid line shows the change of the required load in cases where the rate of change of the required load is equal to or less than the specified value. In this case, at a point in time t2, the required load by the driver starts to increase, and the required load increases relatively gently until a point in time t5. Also, a broken line shows the change of the required load in cases where the required load change rate is larger than the specified value. In this case, at a point in time t1, the required load by the driver starts to increase, and the required load increases relatively steeply until a point in time t4.

In Fig. 4(b), there are shown the temporal changes of the rates of change of the required load in the above-mentioned two cases. As can be seen from Fig. 4(b), too, in the case shown by the solid line, the rate of change of the required load at the time of changing is equal to or less than the specified value. On the other hand, in the case shown by the broken line, the rate of change of the required load at the time of changing is larger than the specified value.

In Fig. 4(c), there are shown the temporal changes of the light oil heat amount ratio and the CNG heat amount ratio in cases where the required load change rate is larger than the specified value in Fig. 4(a) and Fig. 4(b) (in the cases shown by the broken lines). In this figure, the heat amount ratio of CNG is shown by a broken line, and the heat amount ratio of light oil is shown by a solid line. Until the point in time t1, the amounts of injection of light oil and CNG become the values thereof as decided by the injection amount decision program, and in this case, the heat amount ratio of CNG is set to be larger than the heat amount ratio of light oil.

Then, at a point in time t3 with a slight time lag with respect to the point in time t1, the light oil heat amount ratio once becomes 100 %, and the CNG heat amount ratio once becomes 0 %. Then, after that, the heat amount ratio of light oil decreases gradually, approaching a value thereof which should be decided by the injection amount decision program. Similarly, the heat amount ratio of CNG increases gradually, and this also approaches a value thereof which should be decided by the injection amount decision program.

In Fig. 4(d), there is shown the temporal change of the total amount of heat by combustion of light oil and CNG. It will be understood that at the point in time t3 at which the change of the required load by the driver is dealt with, the total amount of heat increases, but thereafter, even if the heat amount ratio of light oil and the heat amount ratio of CNG change, the total amount of heat is maintained constant.

### [Second Embodiment]

Next, a second embodiment of the present invention will be described. In this embodiment, reference will be made to an example in which the heat amount ratio of light oil and the heat amount ratio of CNG, which are set in cases where the rate of change of the required load by the driver is larger than the specified value, are not set to the fixed values of 100 % and 0 %, respectively, but are changed according to the value of the required load change rate.

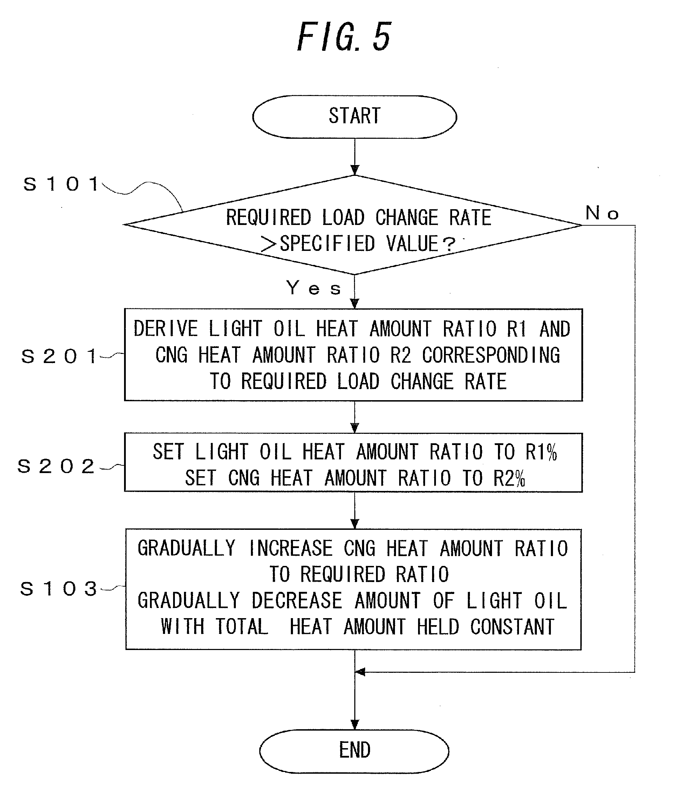

Fig. 5 shows a flow chart of a transient injection amount decision routine 2 in this embodiment. A difference between this routine and the transient injection amount decision routine explained in the first embodiment is in that processes of steps S201 and S202 are carried out instead of that of step S102. Hereinafter, only the difference between this routine and the aforementioned transient injection amount decision routine will be explained. In cases where a determination is made in step S101 of this routine that than the required load change rate is larger than the specified value, then in step S201, a value of the heat amount ratio R1 of light oil and a value of the heat amount ratio R2 of CNG, which correspond to the required load change rate in that case, are derived. Thereafter, in step S202, the heat amount ratio of light oil is set to R1, and the heat amount ratio of CNG is set to R2.

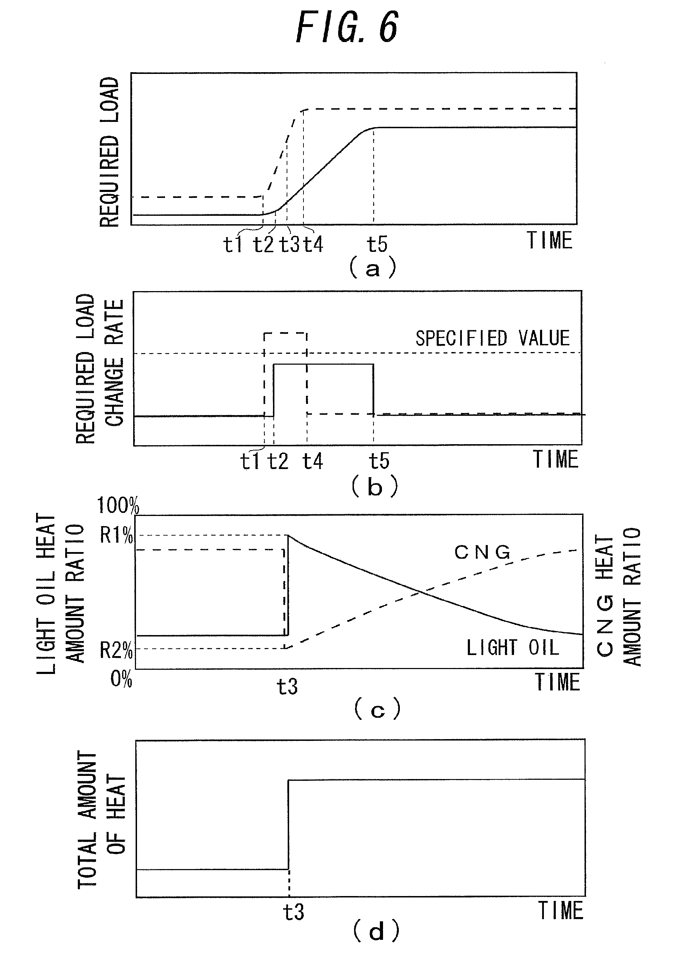

In Fig. 6, there are shown the temporal changes of individual parameters in cases where the transient injection amount decision routine 2 is carried out at the time when the required load by the driver changes. Because a difference of this figure from Fig. 4 is only in Fig. 6(c), in the following, reference will be made to only Fig. 6(c). In Fig. 6(c), there are shown the temporal changes of the heat amount ratio of light oil and the heat amount ratio of CNG in cases where the required load change rate is larger than the specified value in Fig. 6(a) and Fig. 6(b). In the point in time t3, the light oil heat amount ratio once becomes R1, and the CNG heat amount ratio once becomes R2 (R1 + R2 = 100 %). Then, after that, the heat amount ratio of light oil decreases gradually, approaching a value thereof which should be decided by the injection amount decision program. Similarly, the heat amount ratio of CNG increases gradually, and this also approaches a value thereof which should be decided by the injection amount decision program.

In this embodiment, R1 and R2 may be set in such a manner that R1/R2 becomes as small as possible, within a range in which the operating performance and emissions do not get worse in a remarkable extent under the influence of the volume of CNG. By doing so, it becomes possible to cause the processing of the step S103 to be completed quickly. In addition, in step S201, there may be provided a map in which the relation between the required load change rate and R1, R2 has been stored beforehand, and R1 and R2 may be derived from the map by reading the values of R1, R2 corresponding to the required load change rate in that case. According to this, it becomes possible to derive the values of R1, R2 in a more simple manner.

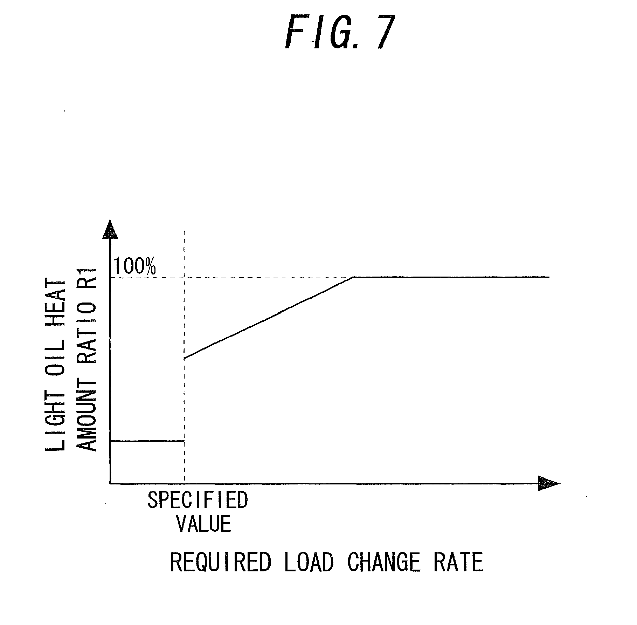

In Fig. 7, there is shown an example of the relation between the required load change rate and the light oil heat amount ratio R1 at the time of dealing with a change in the required load in this embodiment. As shown in Fig. 7, in cases where the required load change rate is equal to or less than the specified value, the light oil heat amount ratio becomes a value which should be decided by the injection amount decision program. In addition, the relation is such that in cases where the required load change rate is larger than the specified value, the light oil heat amount ratio, which should be set at t3, increases in accordance with the increasing required load change rate, and in a range in which the required load change rate is equal to or more than a predetermined value, the light oil heat amount ratio is set to 100 %.

By doing so, even if the required load change rate is larger than the specified value, in a range in which the required load change rate is relatively small, it is possible to hasten or facilitate the ending or completion of the processing of the step S103 by injecting even a small amount of gas fuel, and at the same time, it is also possible to achieve an improvement in thermal efficiency as well as reduction in combustion noise and emissions, which are the effects of gas fuel. In addition, in a range in which the required load change rate is still larger, the light oil heat amount ratio at the point in time t3 can be made to 100 %, whereby the deterioration of the operating performance and emissions under the influence of the volume of gas fuel can be suppressed.

Here, note that in the above-mentioned embodiments, the processing to increase the amount of light oil and to decrease the amount of CNG is carried out in cases where the speed of change (= the rate of change) of the required engine load is larger than the specified value, but for example, the magnitude of change (= the amount of change) of the required engine load, or the acceleration of change of the required engine load may be used as a reference, and in cases where this is larger than a specified value, the processing to increase the amount of light oil and to decrease the amount of CNG may be carried out.

In addition, although the above-mentioned embodiments, reference has been made to the case where the gas fuel is CNG, it goes without saying that the present invention may be applied to a case where the gas fuel is other gas fuel including methane as a principal component, or other gas such as hydrogen, etc.

Here, note that in the above-mentioned embodiments, the ECU 22 and the transient injection amount decision routine, or the ECU 22 and the transient injection amount decision routine 2, constitute a gas fuel supply control means.

### [EXPLANATION OF REFERENCE NUMERALS AND CHARACTERS]

- 1: internal combustion engine
- 2: cylinders
- 3: liquid fuel injection valves
- 4: gas fuel injection valves
- 5: intake ports
- 6: exhaust ports
- 8: intake manifold
- 22: ECU
- 30: liquid fuel tank
- 31: fuel pressure feed pipe
- 32: fuel pump
- 33: common rail
- 40: CNG tank
- 41: gas fuel supply pipe
- 42: regulator
- 43: distribution pipes

## Claims

1. A multi-fuel internal combustion engine in which gas fuel and liquid fuel are caused to combust, thereby obtaining an engine output, **characterized by** comprising:
a supply amount decision means that carries out supply amount decision processing to decide an amount of supply of said gas fuel and an amount of supply of said liquid fuel according to a required engine load which is an engine load required by a driver;
a fuel supply means that supplies said gas fuel and said liquid fuel in the amounts of supply decided by said supply amount decision means to said internal combustion engine; and
a gas fuel supply control means that prohibits the supply of said gas fuel in an amount equal to or more than a predetermined amount irrespective of the decision by said supply amount decision means, in cases where the speed of change of said required engine load is larger than a specified value.

2. The multi-fuel internal combustion engine as set forth in claim 1, **characterized in that**
in cases where the supply of said gas fuel in the amount equal to or more than the predetermined amount is prohibited by said gas fuel supply control means, generation of an engine output corresponding to said required engine load after changed is made possible by causing the amount of said liquid fuel to increase.

3. The multi-fuel internal combustion engine as set forth in claim 2, **characterized in that**
after the supply of said gas fuel in the amount equal to or more than the predetermined amount is prohibited and the amount of said liquid fuel is caused to increase, the amount of the gas fuel is increased and at the same time the amount of the liquid fuel is decreased, while maintaining a total amount of heat generated by combustion of the gas fuel and the liquid fuel.

4. A method for controlling a multi-fuel internal combustion engine in which gas fuel and liquid fuel are caused to combust, thereby obtaining an engine output, **characterized by** comprising:
a supply amount decision step to carry out supply amount decision processing to decide an amount of supply of said gas fuel and an amount of supply of said liquid fuel according to a required engine load which is an engine load required by a driver; and
a fuel supply step to supply said gas fuel and said liquid fuel in the amounts of supply decided in said supply amount decision step to said internal combustion engine;
wherein the supply of said gas fuel in an amount equal to or more than a predetermined amount is prohibited irrespective of the decision in said supply amount decision step, in cases where the speed of change of said required engine load is larger than a specified value.

5. The method for controlling a multi-fuel internal combustion engine as set forth in claim 4, **characterized in that**
in cases where the supply of said gas fuel in the amount equal to or more than the predetermined amount is prohibited, generation of an engine output corresponding to said required engine load after changed is made possible by causing the amount of said liquid fuel to increase.

6. The method for controlling a multi-fuel internal combustion engine as set forth in claim 5, **characterized in that**
after the supply of said gas fuel in the amount equal to or more than the predetermined amount is prohibited and the amount of said liquid fuel is caused to increase, the amount of the gas fuel is increased and at the same time the amount of the liquid fuel is decreased, while maintaining a total amount of heat generated by combustion of the gas fuel and the liquid fuel.
